(19) Europäisches Patentamt / European Patent Office / Office européen des brevets

(11) **EP 3 504 979 B1**

(12) **EUROPEAN PATENT SPECIFICATION**

(45) Date of publication and mention
of the grant of the patent:
**22.07.2020 Bulletin 2020/30**

(51) Int Cl.:
*A23C 9/12* *(2006.01)*       *A23C 9/13* *(2006.01)*
*A23C 21/06* *(2006.01)*

(21) Application number: **18210521.3**

(22) Date of filing: **05.12.2018**

(54) **METHOD FOR PRODUCING YOGHURT**

VERFAHREN ZUR HERSTELLUNG VON JOGHURT

PROCÉDÉ DE FABRICATION DE YAOURT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2017 BE 201706007**

(43) Date of publication of application:
**03.07.2019 Bulletin 2019/27**

(73) Proprietor: **Pur Natur Invest
9770 Kruisem (BE)**

(72) Inventor: **PATTEEUW, Lieven
8470 Gistel (BE)**

(74) Representative: **Gevers Patents
Intellectual Property House
Holidaystraat 5
1831 Diegem (BE)**

(56) References cited:
**GB-A- 2 407 249**

- **SODININ ISABELLE ET AL: "Manufacturing
Yoghurt and Fermented Milks, Milk and
milk-based dairy ingredients",
MANUFACTURING YOGURT AND FERMENTED
MILKS, BLACKWELL PUBLISHING, PAGE(S) 167
- 177 , 1 January 2006 (2006-01-01), XP002497557,
Retrieved from the Internet:
URL:http://books.google.nl/books?id=lroZmO
N2tHsC&pg=PA167&lpg=PA167&dq=sodini,+mil
k-
based+dairy+ingredients&source=web&ots=Sp
C
QK9-5Zy&sig=ydp-IP7trkP4OEosf7Sbt6LzDPQ&
hl
=en&sa=X&oi=book_result&resnum=1&ct=resul
t [retrieved on 2008-09-26]**
- **MUIR D D ET AL: "OVINE MILK. 3. EFFECT OF
SEASONAL VARIATIONS ON PROPERTIES OF
SET AND STIRRED YOGURTS",
MILCHWISSENSCHAFT, VV GMBH
VOLKSWIRTSCHAFTLICHER VERLAG.
MUNCHEN, DE, vol. 48, no. 9, 1 January 1993
(1993-01-01), pages 509-513, XP000414548, ISSN:
0026-3788**

**Description**

The present invention relates to a method for producing different batches of a same yogurt from fresh milk having a protein content (E) that is variable between a minimum ($E_{min}$) and a maximum protein content ($E_{max}$). For each batch of the yogurt, a batch of fresh milk is provided; the protein content (E) of the milk in this batch is determined, and a predetermined amount of protein (P) is added to the milk by mixing at least one milk protein containing powder into the milk for forming a mixture. This mixture is then pasteurized and homogenized, after which it is inoculated with lactic acid bacteria including at least *Lactobacillus delbrueckii* ssp. *Bulgaricus* and *Streptococcus thermophilus.* Then, the mixture is fermented using these lactic acid bacteria for forming the batch of yogurt.

The invention particularly relates to a method for producing a same yogurt over a longer period of time, in particular over a period of at least one year, wherein the effects of seasonal variations in the properties of the milk used for producing the yogurt are limited.

In practice, variation particularly occurs in the protein content of milk, more in particular of cow's milk. In fall and in winter the protein content of cow's milk is usually noticeably higher than in spring and summer. This can for instance be observed in the measuring data listed in table 1 of the paper "Effect of pasteurisation and season on milk composition and ripening of Ras cheese" by Hattem, H. E. et al. in the Journal of Brewing and Distilling Vol. 3(2), pp. 15-22, of March 2012. According to this paper, the cow's milk had a total protein content that was 3.38% on average in winter, 3.31% in spring and 3.04% in summer. The casein content of the cow's milk was 2.66% on average in winter, 2.62% in spring and 2.50% in summer. The proportion of casein in the total protein content thus increased from winter to summer.

In cow's milk, on average, about 82% of the proteins are constituted by casein and about 18% by serum or whey proteins.

SODININ ISABELLE ET AL: "Manufacturing Yoghurt and Fermented Milks, Milk and milk-based dairy ingredients", MANUFACTURING YOGURT AND FERMENTED MILKS, BLACKWELL PUBLISHING, PAGES 167 - 177, 1 January 2006 (2006-01-01), XP002497557, discloses that standardization of the protein content by addition of milk protein in various forms (powders or concentrates, fractionated or whole milk protein) reduces the effects of milk seasonality in yogurt manufacture. For preparing yogurt, fresh milk is preferably used as a base ingredient, wherein whole milk, skimmed or semi-skimmed milk or a combination thereof can be used depending on the desired fat content of the yogurt.

To obtain a more stable yogurt, which is in other words less prone to syneresis, stabilizers can be added to the milk, such as pectin, gelatin and modified starch. As these can affect the taste of the yogurt, and as they are not derived from milk, it is preferred in practice for milk protein containing powders to be added to the fresh milk. In practice, skimmed milk powder is primarily used for this purpose. Lately, for some yogurts, part of the skimmed milk powder is replaced by whey powder. The advantages and possibilities of this are summarized in the monograph "U.S. Whey Ingredients in Yogurt and Yogurt Beverages" by Dr. Alan Hugunin, published in 2009 by the U.S. Dairy Export Council®.

As the amount of protein in the yogurt affects its viscosity and thus its stability, and as the amount of protein in the fresh milk varies, it is known for the amount of milk protein containing powder added to the milk to be adapted to the protein content of the fresh milk so that the yogurt always has a same protein content.

The inventors have now found, however, that when yogurt, in particular stirred yogurt, is produced with a relatively high viscosity, and thus with a relatively high protein content, problems of a too high viscosity of the yogurt may occur in wintertime, as a result of which, some batches of the yogurt, when they were in glass jars, could no longer be poured from these jars.

An object of the present invention is therefore to provide a novel method for producing yogurt by which the viscosity of the yogurt can be better controlled. More in particular, an object of the invention is to limit the variations in the viscosity of a same yogurt observed by the inventors as a result of the variation in the protein content of the fresh milk.

For this purpose, the method according to the invention is characterized in that for a base milk, having a protein content ($E_{basis}$) that is at most equal to said minimum protein content ($E_{min}$), an amount of protein ($P_{basis}$) is determined that is to be added to said base milk through said milk protein containing powder for obtaining said yogurt, and that for each batch of said yogurt, said predetermined amount of protein (P) is determined based on the following formula:

$$0.9(P_{base}-E_{excess}-2E_{excess}^2) < P < 1.1(P_{base}-E_{excess}-2E_{excess}^2)$$

with

$$E_{excess} = E-E_{base},$$

where:

P = said predetermined amount of protein expressed in g/100 ml of milk;
E = the protein content of the milk in said batch expressed in g/100 ml of milk;
$E_{base}$ = the protein content of said base milk, expressed in g/100 ml of milk; and
$P_{base}$ = said amount of protein, expressed in g protein/100 ml of milk, that is to be added to said base milk through said milk protein containing powder for obtaining said yogurt,
with the optional condition that when P according to said formula is lower than a predetermined minimal amount of protein ($P_{min}$), then P should be equal to said predetermined minimal amount of protein ($P_{min}$).

According to the invention, it was found that the more proteins the fresh milk from which the yogurt is produced contains, the fewer proteins need to be added through the milk protein containing powder for the yogurt to have a same average viscosity. In other words, when the fresh milk contains more proteins, the protein content of the yogurt does not need to be as high to obtain the desired stability/viscosity, or in other words, the protein content in the yogurt does not need to be as high to avoid a too high viscosity of the yogurt. It appears that the proteins provided by the fresh milk have better gel forming or gel solidifying properties, or in other words are of a better quality, than the proteins provided by the milk protein containing powder, even though they are the same proteins, i.e., caseins and whey proteins.

More in particular, the inventors have found that effectiveness of the proteins in the fresh milk increases exponentially as a function of the extra amount of protein present compared to a base milk having a low protein content, more in particular having a protein content that is lower than the minimum protein content of the fresh milk used for preparing the yogurt. Here, the amount of protein should always be expressed in grams of protein per 100 ml of the fresh milk. By not only lowering the amount of protein provided by the powder proportionally as a function of the increase of the protein content in the fresh milk, but additionally lowering this amount in an exponentially increasing way according to the formula provided above, the viscosity of the yogurt could be better controlled and, more in particular, the seasonal variation of the viscosity of the yogurt could be avoided. Thus, for relative high viscosity stirred yogurt, it was possible to avoid the yogurt being too viscous in some production batches in wintertime to be pourable from a jar.

In the method according to the invention, for each batch of said yogurt, said predetermined amount of protein (P) is preferably determined based on the following formula:

$$0.95(P_{base}-E_{excess}-2E_{excess}^2) < P < 1.05(P_{base}-E_{excess}-2E_{excess}^2),$$

more preferably based on the following formula:

$$0.99(P_{base}-E_{excess}-2E_{excess}^2) < P < 1.01(P_{base}-E_{excess}-2E_{excess}^2)$$

and most preferably based on the following formula:

$$P = P_{base}-E_{excess}-2E_{excess}^2.$$

In a first embodiment of the method according to the invention, the yogurt is a stirred yogurt produced by breaking up the gel formed after fermentation of the mixture, in particular by passing the fermented mixture through a filter before filling the yogurt into containers.

As, in the case of stirred yogurt, the gel is broken up before transferring the yogurt into the containers, a relatively large amount of milk protein containing powder is required for the stirred yogurt in the container to still be able to develop sufficient viscosity, more in particular to remain stable for a sufficiently long amount of time, in particular at least four weeks, and thus to exhibit no syneresis, i.e. no separation of serum (whey liquid) from the gel mass. When fruit is added to stirred yogurt, for instance, this is preferably also stirred into the yogurt. The stirred yogurt therefore should be sufficiently firm to keep the mixture of yogurt and fruit sufficiently stable.

For stirred yogurt, the condition is that when P according to said formula is lower than a predetermined minimal amount of protein ($P_{min}$), then P should be equal to said predetermined minimal amount of protein ($P_{min}$), preferably not optionally. The predetermined minimal amount of protein ($P_{min}$), expressed in g/100 ml of milk, is then in particular lower than 1.15, preferably lower than 1.05 and more preferably lower than 0.95. Furthermore, the predetermined minimal amount of protein ($P_{min}$), expressed in g/100 ml of milk is then in particular higher than dan 0.7, preferably higher than 0.8 and more preferably higher than 0.85.

Even when the fresh milk itself already contains a relatively high amount of proteins, it is still preferable for a minimal amount of milk protein containing powder to be added to stirred yogurt for the yogurt to be sufficiently firm.

For stirred yogurt, the value of $P_{base}$ in said formula is preferably chosen sufficiently high for the batches of the stirred yogurt to have an average viscosity at 8°C that is at least 1300 mPa.s, preferably at least 1400 mPa.s and more preferably at least 1500 mPa.s.

With such viscosities, the stability of the stirred yogurt can be guaranteed over a sufficiently long period of time, and in particular it can be guaranteed that over a shelf life of at least four weeks no syneresis of the yogurt will occur.

In a second embodiment of the method according to the invention, the yogurt is a set yogurt produced by filling said mixture into containers before fermentation.

In this second embodiment, the gel formed in the containers is retained and thus a smaller amount of milk protein containing powder needs to be added for obtaining a sufficiently firm and stable gel. When, for instance, fruit is added to set yogurt, it is preferably placed into the containers for the yogurt before introducing the mixture of fresh milk and milk protein containing powder therein to be fermented. Contrary to stirred yogurt, set yogurt thus does not need to take in the fruit.

For set yogurt, said optional condition is preferably not taken into account, so that P can be zero.

Thus, at a sufficiently high protein content of the fresh milk, it is possible that for set yogurt, no milk protein containing powder needs to be added to the milk.

For set yogurt, the value of $P_{base}$ in said formula is preferably chosen such that the batches of the set yogurt at 8°C have an average viscosity comprised between 200 and 400 Pa.s, and preferably higher than 250 Pa.s and more preferably lower than 350 Pa.s.

With such viscosities, the stability of the set yogurt can be guaranteed over a sufficiently long period of time, and in particular, it can be guaranteed that over a shelf life of at least four weeks no syneresis of the yogurt will occur.

In an embodiment of the method according to the invention, at least two milk protein containing powders are mixed into the milk, including at least one skimmed milk powder and at least one whey protein concentrate, wherein an amount of protein ($P_{MMP}$) is added to the milk through said at least one skimmed milk powder, and a further amount of protein ($P_{WEC}$) is added through said at least one whey protein concentrate.

It is possible to produce a yogurt in which only skimmed milk powder is used as a milk protein containing powder. However, partly substituting this skimmed milk powder with a whey protein concentrate offers the advantage that a more firm or more viscous yogurt can be produced that is moreover more stable, so that separation of serum (syneresis) occurs less quickly. In principle, it is also possible to use only whey protein concentrate as a milk protein containing powder. This may however cause defects in the yogurt, such as spot formation, in other words the formation of a grainy or sandy yogurt. Therefore, a combination of skimmed milk powder and whey protein concentrate is preferably used as milk protein containing powder.

Preferably, the ratio between $P_{MMP}$, expressed in g/100 ml of milk, and $P_{WEC}$, expressed in g/100 ml of milk, is comprised between 1 and 5, more preferably between 2 and 4.

In the embodiment where a combination of skimmed milk powder and of a whey protein concentrate is used, the ratio between $P_{MMP}$, expressed in g/100 ml of milk, and $P_{WEC}$, expressed in g/100 ml of milk, is preferably kept at a constant value for producing the different batches of the yogurt, or this ratio may differ at most 10% from the average ratio.

By maintaining the ratio between het skimmed milk powder and the whey protein concentrate, the occurrence of taste differences between the different batches is avoided.

In the embodiment where said condition is not conditional, in particular for stirred yogurt, said predetermined minimal amount of protein ($P_{min}$), expressed in g/100 ml of milk, preferably comprises at least 0.20 g/100 ml proteins originating from said at least one whey protein concentrate.

This minimal amount of whey protein which is thus always added to the fresh milk, ensures a minimal additional binding of the water in the yogurt, and thus a better stability of the latter.

In an embodiment of the method according to the invention, the mixture of the fresh milk and the milk protein containing powder is pasteurized for a time of at least 8 minutes at a temperature in excess of 88°C.

The advantage of this embodiment is that at this temperature and for this minimal time duration, the milk proteins, in particular the whey proteins, are sufficiently denatured to allow them to contribute to the firmness of the gel and to the chemical and physical binding of the water present therein.

In an embodiment of the method according to the invention, no further stabilizers are added to said mixture apart from said milk protein containing powder.

All ingredients of the yogurt thus originate from milk, so that a pure milk product is obtained. Any negative effects of other stabilizers on the taste of the yogurt are avoided in this way as well.

In an embodiment of the method according to the invention, said condition is not optional, and said predetermined amount of protein (P) added to the milk for increasing its protein content equals said minimal amount ($P_{min}$) when said predetermined amount of protein (P) determined using said formula is lower than said minimal amount of protein ($P_{min}$).

Thus, in this embodiment, at least said minimal amount of protein is always added to the fresh milk.

In an embodiment of the method according to the invention, the maximum variation of the protein content of the fresh milk is monitored over at least one year, and said minimum protein content ($E_{min}$) and said maximum protein content ($E_{max}$) are determined, wherein said base milk has a protein content ($E_{base}$) that is at most equal to said minimum protein content ($E_{min}$) and at most 0.1 g/100ml lower than said minimum protein content ($E_{min}$).

In this embodiment, starting from the minimum protein content, an exponential decrease of the total protein content of the mixture of fresh milk and milk protein containing powder occurs, allowing an optimal adaptation to be obtained of the amount of protein administered through the powder to the extra amount of protein which is present in higher amounts in the fresh milk compared to the base milk.

Further advantages and details of the invention will become clear from the following description of some specific embodiments of the method according to the invention. This description is made in reference to the appended figures, in which:

> Figure 1 schematically shows an overview of a specific embodiment of the production process of stirred yogurt;
> Figure 2 schematically shows an overview of a specific embodiment of the production process of set yogurt;

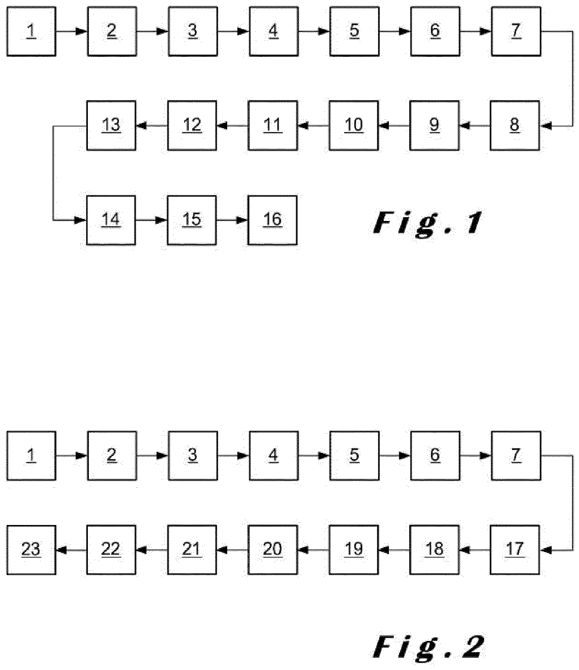

In the production process for making stirred yogurt as schematically shown in figure 1, the milk supplied is received in step 1 and, after filtering in step 2, is stored in tanks in step 3. After arriving in the dairy farm, the milk is immediately processed or subjected to thermal treatment prolonging its storage life with a maximum of 48 hours.

In a subsequent step 4, a batch is taken from the stored milk, optionally a combination of whole and skimmed milk, and a milk protein containing powder is added to the milk. In step 5, the obtained mixture is then stirred for several hours, so that the milk protein containing powder is allowed to sufficiently hydrate. After filtering the mixture in step 6, the mixture is then pasteurized and homogenized in step 7, in particular at a temperature of at least 88°C for at least 8 minutes. This thermal treatment causes denaturation of the proteins, as a result of which the whey proteins, in particular, will bind more water.

In the subsequent step 8, the pasteurized and homogenized mixture is then cooled to incubation temperature, in particular to a temperature of 40 to 45°C, after which the mixture in step 9 is inoculated with the lactic acid bacteria. For yogurt, these lactic acid bacteria comprise at least *Lactobacillus delbrueckii* ssp. *Bulgaricus* and *Streptococcus thermophilus.* It is also possible to add other bacteria, in particular other strains of *Lactobacillus* and *Bifidobacterium,* which can then for instance serve as probiotics.

In step 10, the inoculated mixture is then further fermented. Fermentation is stopped when the pH of the mixture has fallen below a predetermined value, in particular below a pH of 4.6 to 4.8.

The fermented mixture is again passed through a filter in step 11. This improves the texture of the yogurt. The filtered yogurt is then cooled in step 12, in particular to room temperature, after which the yogurt is stored for a few hours at this temperature (step 13) to allow slime formation by the bacteria. This is because the bacteria produce exogenous polysaccharides that contribute to the gel formation in the yogurt.

The yogurt thus produced is passed through a coarser filter in step 14 to break up the gel structure and thereby to obtain a uniform consistency with no lumps. Then, in step 15, the yogurt is filled into containers, in particular into pots or jars that may have different volumes, but usually have a volume of at most 1 liter. While filling the yogurt, other additional products can be added to the yogurt, in particular fruit for producing fruit yogurt. Here, this fruit is preferably mixed into the yogurt.

In the final step 16, the filled containers are cooled down as quickly as possible to a temperature of 6 to 8°C. At this temperature, the yogurt has a considerable shelf life.

According to the production process as described above in reference to figure 1, stirred yogurt is made. Figure 2 shows a production process for making set yogurt.

In the production process for making set yogurt as shown in figure 2, the first steps 1 - 7 are identical to those of the production process for making stirred yogurt. Hence, for the description of these first seven steps, we refer to the description given above.

In the subsequent step 17, the pasteurized and homogenized mixture is not cooled down to incubation temperature, but to a lower storage temperature of 6 to 8°C. At this temperature, no fermentation or substantially no fermentation takes place. Then, in step 18, the mixture is inoculated with the lactic acid bacteria described above, and also optionally with the further bacteria strains described above.

In step 19, the inoculated mixture is then stored at said storage temperature in a storage tank. From the storage tank, the mixture is passed through a heating device in step 20, by means of which the mixture is heated to the incubation temperature. In step 21, the heated mixture is filled into containers, in particular in pots or jars that may have different volumes, but usually have a volume of at most 1 liter. While filling the mixture, other additional products can be added to the mixture, in particular fruit for producing fruit yogurt. As this fruit is at a lower temperature than the mixture, it is usually placed at the bottom of the container first, before adding the mixture to be fermented on top of the fruit.

In step 22, the filled containers are kept in a warm incubation cell so that the mixture in the containers is allowed to ferment. The evolution of the fermentation is monitored based on the evolution of the pH of the mixture. When the pH is sufficiently low, in step 23, the containers having the yogurt therein are cooled as quickly as possible in a cooling tunnel down to a temperature of 6 to 8°C. At this temperature, the yogurt can then further be stored.

Both for stirred yogurt and for set yogurt, it is important during batch production thereof that the viscosity of the yogurt is kept as constant as possible. The viscosity of the yogurt is not only important for the stability of the yogurt, and thus for preventing syneresis, but is also an important product parameter that can be observed by the consumer, in particular when pouring the yogurt (mainly for stirred yogurt) and when stirring the yogurt in the container (not only for stirred yogurt, but mainly for set yogurt as well).

The stirred yogurt produced by means of the method according to the invention preferably has an average viscosity (averaged over at least 20 production batches) at 8°C of at least 1300 mPa.s, preferably at least 1400 mPa.s and more preferably at least 1500 mPa.s. The average viscosity of the stirred yogurt, at 8°C, is preferably lower than 1800 mPa.s, and more preferably lower than 1700 mPa.s.

The set yogurt produced by means of the method according to the invention preferably has an average viscosity (averaged over at least 20 production batches) at 8°C which is preferably comprised between 200 and 400 Pa.s, and preferably higher than 250 Pa.s and more preferably lower than 350 Pa.s.

The viscosities of the stirred yogurt should be determined by means of the Rheomat RM 100 viscosity meter provided with the MK DIN-2 spindle. For the viscosity measurement, the yogurt is transferred into a 500g pot. At the start of the measurement, the thick part of the spindle is fully immersed in the yogurt before, after a 10 second wait, the measurement is started.

The viscosities of the set yogurt should be determined by means of the Brookfield DV2T viscosity meter provided with spindle 93, wherein the spindle is placed not in, but onto the set yogurt. After the auto zero of the viscosity meter, the spindle is placed onto the meter. The "method single point averaging" is set to 48 sec, the speed of 2.5 is selected and the end condition is 48 sec. The pin at the back of the meter must be pressed, so that the measurement is carried out from top to bottom. In this way, the structure of the yogurt is not broken during measurement. Once the structure has been broken, an incorrect measurement will be obtained. The indicated viscosity is expressed in Pa.s.

As a base for making the yogurt, a milk supply is used, in particular cow's milk, of which both the protein content, expressed in g protein/100 ml of milk, and the fat content are variable. Over the course of a year, there is a global evolution of the protein content, wherein the protein content on average is higher in winter dan in summer, but the protein and fat content of the fresh milk supplied day by day varies from batch to batch.

For making yogurt with a predetermined fat content, the fresh milk is standardized by using fresh whole milk, fresh skimmed milk (semi-skimmed or low-fat milk) or a combination thereof. If necessary, the fat content can be further increased by adding cream. Fresh milk is to be understood as milk which is not reconstituted from powdered milk. The milk as such may already be a few days old.

According to the invention, the minimum $E_{min}$ and maximum $E_{max}$ values are determined, both expressed in g protein/100 ml of milk, between which the protein content of the fresh milk supply may vary. The protein content is an average over, in particular, the volumes of the tanker trucks in which the milk is supplied, and which contain the milk of several cows, and even of several farms. These tanker trucks have a volume of for instance 10000 liters, or even more.

First, the type of yogurt to be produced is determined, more in particular the viscosity, protein content, fat content the yogurt is to have, and which milk protein containing powder or which combination of milk protein containing powders will be added to the fresh milk for this purpose.

The milk protein containing powder may be chosen from different kinds of powders, such as milk powder and whey powder. The whey powder may be sweet whey powder, a whey powder concentrate, a whey protein isolate or a combination thereof. The whey powder concentrate may for instance have a protein content comprised between 34 and 89%, while a whey protein isolate may contain over 90% of protein. The milk powder is usually skimmed milk powder. For making the desired yogurt with a viscosity as constant as possible, first of all, a base milk is defined having a protein content $E_{base}$ that is at most equal to het minimum protein content $E_{min}$ of the supplied or store milk, and is preferably equal to $E_{min}$ or at most 0.1 g/100ml lower than $E_{min}$. Further, for this base milk, the amount of protein P, expressed in g/100 ml of milk, to be added to the base milk through the milk protein containing powder for obtaining the desired yogurt, in particular for obtaining the desired viscosity of this yogurt, is determined.

For making the yogurt from a batch of fresh milk, which can be a combination of for instance an amount of verse whole milk and an amount of verse skimmed milk, the protein content E of this batch is determined. Then, the surplus, or excess, of protein $E_{excess}$ is calculated as the difference with the protein content $E_{base}$ of the base milk.

For determining the amount of protein to be added to the fresh milk through said milk protein containing powder, first of all, the excess protein $E_{excess}$ present in the fresh milk is subtracted from the amount of protein $E_{base}$ that needed to be added to the base milk.

However, according to the invention, it was found that when $E_{excess}$ increases, the amount of protein determined in this way to be added through the powder is too high, as the viscosity of the yogurt using richer milk becomes higher. It was found in particular that the extra amount of protein present in the fresh milk thus needed to be upgraded, and that an extra amount, equal to two times $E_{excess}$ squared, is to be subtracted from the amount of protein $P_{base}$ that is to be added to the fresh milk through the powder.

The amount of protein P to be added to the fresh milk through the milk protein containing powder, or the combination of milk protein containing powders, is therefore determined according to the invention based on the following formula:

$$P = P_{base} - E_{excess} - 2E_{excess}^2$$

with

$$E_{excess} = E - E_{base}$$

where:

P = the amount of protein, expressed in g/100 ml of milk, to be added to the fresh milk through the milk protein containing powder, or the combination of milk protein containing powders;
E = the protein content of the fresh milk expressed in g/100 ml of milk; $E_{base}$ = the protein content of the base milk, expressed in g/100 ml of milk; and
$P_{base}$ = the amount of protein, expressed in g protein/100 ml of milk, to be added to the base milk through the milk protein containing powder or the combination of milk protein containing powders for obtaining the desired yogurt.

When carrying out the method according to the invention, a limited deviation from the amount of protein determined based on this formula is permitted, wherein, in particular, the determined amount may be raised or lowered by 10%, wherein the amount preferably may only be raised or lowered by 5%. Most preferably, the amount of protein added through the powder or the powders corresponds to the amount determined by the formula provided above.

In particular for stirred yogurt, it may be advisable to always add a minimal amount of protein through the milk protein containing powder, for the yogurt to be sufficiently firm, or in other words not to become too soft. As a result, the amount of protein P added through the powder or the powders is preferably always higher than or equal to a predetermined minimal amount of protein $P_{min}$. For stirred yogurt, this minimal amount of protein $P_{min}$, expressed in g/100 ml of milk, is preferably lower than 1.15, more preferably lower than 1.05 and in particular lower than 0.95 and preferably higher than 0.7, more preferably higher than 0.8 and in particular higher than 0.85.

For set yogurt, it is admissible, but not required, for a minimal amount powder to be provided, as set yogurt is in itself already firmer and the amount powder to be added to it, considering the lower protein contents of the milk, is therefore significantly lower.

Due to the different effects of skimmed milk powder and whey protein concentrate on the yogurt, a combination of both is preferably used. An amount of protein $P_{MMP}$ is then added to the milk through the skimmed milk powder or milk powder, and a further amount of protein $P_{WEC}$ is added through the whey protein concentrate or the whey protein concentrates. The ratio between $P_{MMP}$, expressed in g/100 ml of milk, and $P_{WEC}$, expressed in g/100 ml of milk, is here preferably comprised between 1 and 5, and more preferably between 2 and 4. For the taste of the yogurt to be retained, the ratio between $P_{MMP}$, expressed in g/100 ml of milk, and $P_{WEC}$, expressed in g/100 ml of milk, is preferably kept constant, or this ratio may preferably deviate at most 10% from the average ratio.

Due to the positive effect of whey proteins on the stability of the yogurt, in particular on the stability of stirred yogurt, it is preferable for the minimal amount of protein $P_{min}$ described above that is dosed through the powder or the powders, to contain at least 0.20 g/100 ml proteins originating from the whey protein concentrate or the protein-concentrates.

In addition to the milk protein containing powders mentioned above, other stabilizers could be added. However, to obtain a natural product that is entirely based on dairy products, and furthermore to obtain a pure taste, it is preferable not to add any additional stabilizers, but on the contrary, to obtain the desired viscosity, for a given fat content of the yogurt, purely by means of a sufficiently high protein content in the yogurt.

## Comparative example 1

For an entire year, whole stirred yogurt was produced with an average viscosity of 1375 mPa.s. For the production of this yogurt, skimmed milk powder, having a protein content of 35%, was added to the fresh milk until an equal protein content was always achieved in the mixture of powder and fresh milk. Thus, no upgrade was carried out of the extra amount of protein present in the fresh milk compared to a base milk.

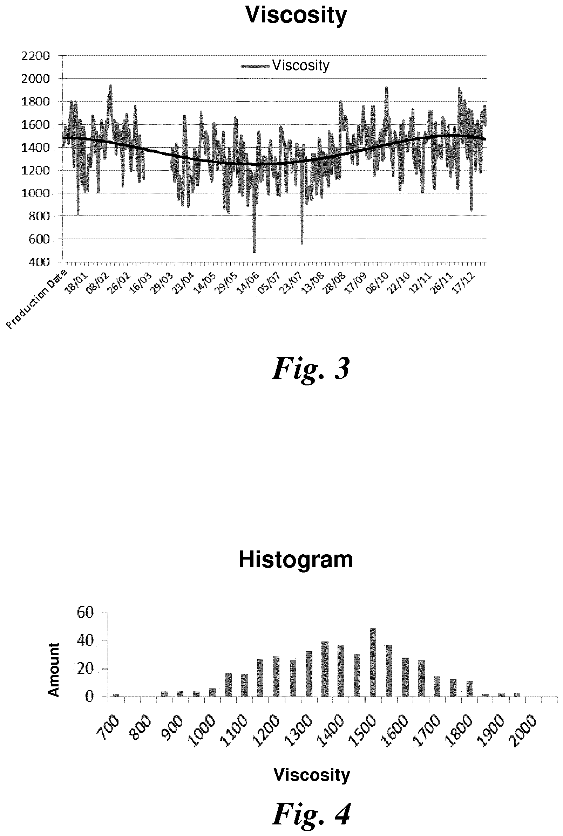

The viscosities of the production batches were listed in figure 3. In this diagram, a fourth power curve was indicated that, based on the least squares, corresponds best to the different viscosity values. The path of this curve shows that a seasonal variation in the viscosity of the produced yogurt can be observed, wherein during winter months the yogurt has a higher viscosity on average than during spring and summer. Between the highest and the lowest value of the curve indicated in figure 3 there is, in particular, a difference of about 200 mPa.s.

In figure 4, the distribution of the different viscosities was indicated. The standard deviation from the average was 225 mPa.s.

### Example 1

For an entire year, whole stirred yogurt was produced with an average viscosity of 1610 mPa.s. For the production of this yogurt, a combination of skimmed milk powder, having a protein content of 35%, and of a whey protein concentrate, having a protein content of 44%, was added to the fresh milk. The ratio between the amount of protein added through the skimmed milk powder $P_{MMP}$, expressed in g/100 ml of milk, and the amount of protein added through the whey protein concentrate $P_{WEC}$, expressed in g/100 ml of milk, equaled 3. An upgrade was carried out of the extra amount of protein present in the fresh milk compared to a base milk, having a protein content of 3.35 g/100 ml, so that in the mixture of powder and fresh milk, the protein content decreased with an increased protein content of the fresh milk. More in particular, the amount of protein added by means of the combination of both powders was determined using the following formula:

$$P = 1.5 - E_{excess} - 2E_{excess}^2,$$

with

$$E_{excess} = E - 3.35$$

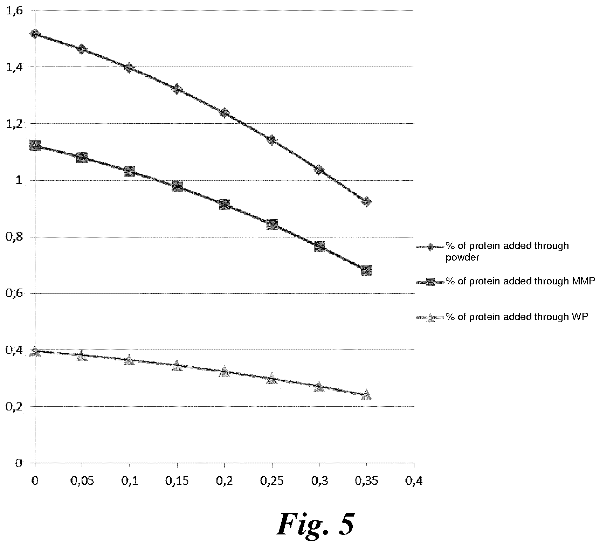

Figure 5 shows the total amount of protein, expressed in g/100 ml of milk, added through both powders, the amount of protein added through the skimmed milk powder and the amount of protein added through the whey protein concentrate as a function of the amount of protein in the fresh milk in addition to the minimum content of 3.35 g/100 ml. After reaching a protein content of 3.7 g/100 ml in the fresh milk, the amount of powders administered was kept constant (not shown in the figure).

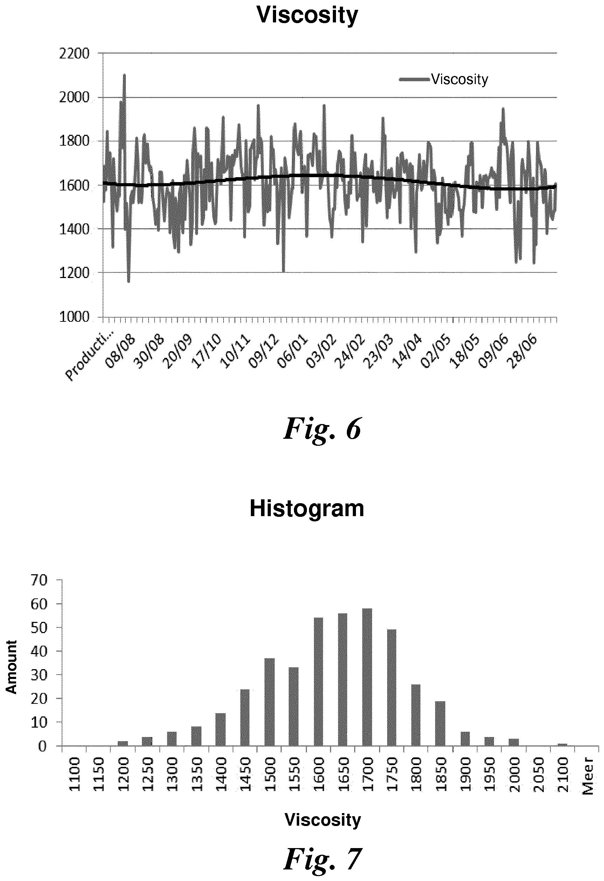

The viscosities of the production batches were listed in figure 6. In this diagram, a fourth power curve was indicated that, based on the least squares, corresponds best to the different viscosity values. The path of this curve shows that the seasonal variation in the viscosity of the produced yogurt decreased significantly. Between the highest and the lowest value of the curve indicated in figure 6, in particular, only a difference of about 60 mPa.s remains.

In figure 7, the distribution of the different viscosities was indicated. The standard deviation from the average was reduced to not more than 147 mPa.s.

### Comparative example 2

For an entire year, skimmed set yogurt was produced with an average viscosity of about 290 Pa.s. For the production of this yogurt, skimmed milk powder, having a protein content of 35%, was added to the fresh milk until an equal protein content was always achieved in the mixture of powder and fresh milk. Thus, no upgrade was carried out of the extra amount of protein present in the fresh milk compared to a base milk.

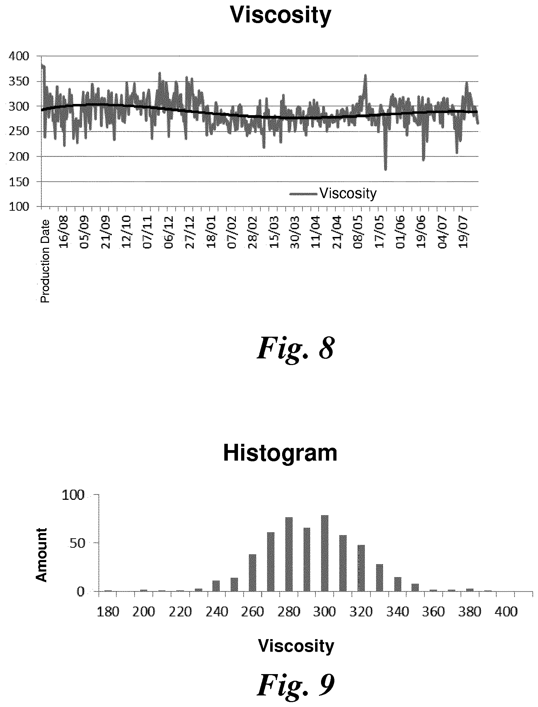

The viscosities of the production batches were listed in figure 8. In this diagram, a fourth power curve was indicated that, based on the least squares, corresponds best to the different viscosity values. The path of this curve shows that a seasonal variation in the viscosity of the produced yogurt can be observed, wherein especially during fall, the yogurt showed a higher viscosity on average.

In figure 9, the distribution of the different viscosities was indicated. The standard deviation from the average was 28 Pa.s.

### Comparative example 3

For an entire year, whole set yogurt was produced with an average viscosity of about 283 Pa.s. For the production of this yogurt, skimmed milk powder, having a protein content of 35%, was added to the fresh milk until an equal protein content was always achieved in the mixture of powder and fresh milk. Thus, no upgrade was carried out of the extra amount of protein present in the fresh milk compared to a base milk.

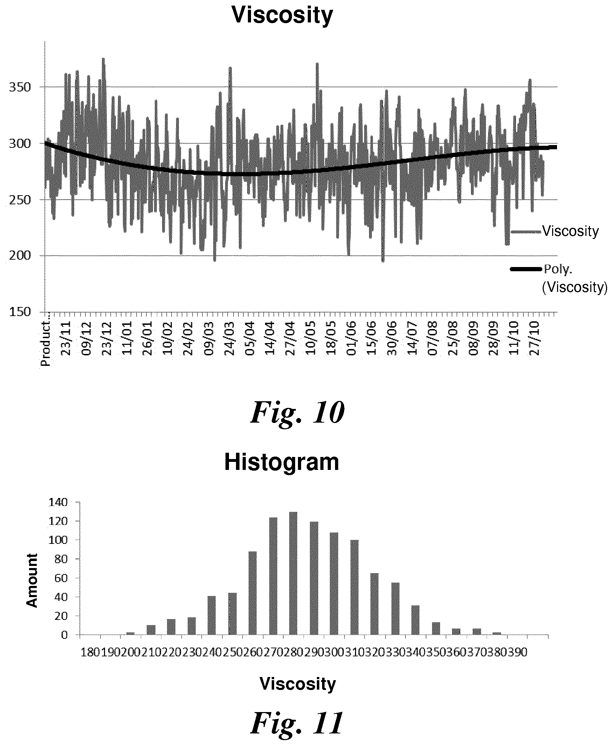

The viscosities of the production batches were listed in figure 10. In this diagram, a fourth power curve was indicated that, based on the least squares, corresponds best to the different viscosity values. The path of this curve shows that a seasonal variation in the viscosity of the produced yogurt can be observed, wherein especially during fall, the yogurt showed a higher viscosity on average.

In figure 11, the distribution of the different viscosities was indicated. The standard deviation from the average was 30 Pa.s.

### Example 2

To reduce the variation of the viscosity of the skimmed and whole set yogurts described above, a novel recipe was proposed. For the production of this novel yogurt, a combination of skimmed milk powder, having a protein content of 35%, and of a whey protein concentrate, having a protein content of 44%, was added to the fresh milk. The ratio between the amount of protein added through the skimmed milk powder $P_{MMP}$, expressed in g/100 ml of milk, and the amount of protein added through the whey protein concentrate $P_{WEC}$, expressed in g/100 ml of milk, again equaled 3. An upgrade was carried out of the extra amount of protein present in the fresh milk compared to a base milk, having a protein content of 3.35 g/100 ml, so that in the mixture of powder and fresh milk, the protein content decreased with an increased protein content of the fresh milk. More in particular, the amount of protein added by means of the combination of both powders was determined using the following formula:

$$P = 0.44 - E_{excess} - 2E_{excess}^2,$$

with

$$E_{excess} = E - 3.35$$

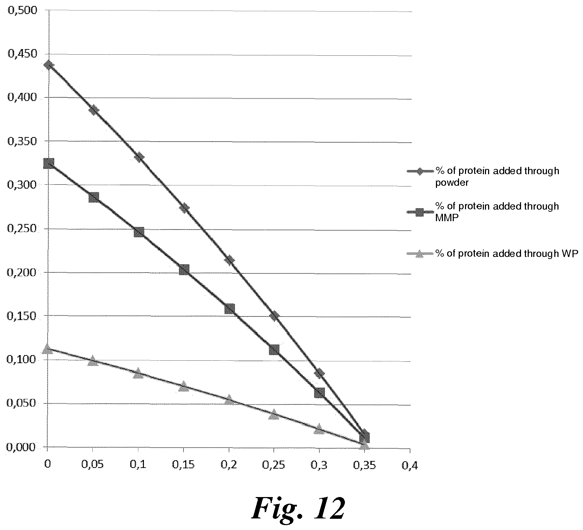

Figure 12 shows the total amount of protein, expressed in g/100 ml of milk, added through both powders, the amount of protein added through the skimmed milk powder and the amount of protein added through the whey protein concentrate as a function of the amount of protein in the fresh milk in addition to the minimum content of 3.35 g/100 ml. After reaching a protein content of 3.7 g/100 ml in the fresh milk, as a result of the upgrade of the protein in the fresh milk, no further powder needs to be added.

### Claims

1. Method for producing different batches of a yogurt from fresh milk having a protein content (E) that is variable between a minimum ($E_{min}$) and a maximum protein content ($E_{max}$), wherein the method, for each batch of said yogurt, comprises the steps of:

   - providing a batch of fresh milk;
   - determining the protein content (E) of the milk in said batch;
   - adding a predetermined amount of protein (P) to the milk in said batch by mixing at least one milk protein containing powder into the milk for forming a mixture;
   - pasteurizing and homogenizing said mixture;
   - inoculating the pasteurized mixture with lactic acid bacteria, including at least *Lactobacillus delbrueckii* ssp. *Bulgaricus* and *Streptococcus thermophilus;* and
   - fermenting the mixture with said lactic acid bacteria for forming said batch of yogurt,

   **characterized in that**
   for a base milk having a protein content ($E_{base}$) that is at most equal to said minimum protein content ($E_{min}$), an amount of protein ($P_{base}$) is determined to be added to said base milk through said milk protein containing powder for obtaining said yogurt, and that for each batch of said yogurt, said predetermined amount of protein (P) is determined based on the following formula:

$$0.9(P_{base} - E_{excess} - 2E_{excess}^2) < P < 1.1(P_{base} - E_{excess} - 2E_{excess}^2)$$

with

$$E_{excess} = E - E_{base},$$

where:

P = said predetermined amount of protein expressed in g/100 ml of milk;

E = the protein content of the milk in said batch expressed in g/100 ml of milk;

$E_{base}$ = the protein content of said base milk, expressed in g/100 ml of milk; and

$P_{base}$ = said amount of protein, expressed in g protein/100 ml of milk, to be added to said base milk through said milk protein containing powder for obtaining said yogurt,

with the optional condition that when P according to said formula is lower than a predetermined minimal amount of protein ($P_{min}$), then P should be equal to said predetermined minimal amount of protein ($P_{min}$).

2. Method according to claim 1, **characterized in that** for each batch of said yogurt, said predetermined amount of protein (P) is determined based on the following formula:

$$0.95(P_{base} - E_{excess} - 2E_{excess}{}^2) < P < 1.05(P_{base} - E_{excess} - 2E_{excess}{}^2),$$

preferably based on the following formula:

$$0.99(P_{base} - E_{excess} - 2E_{excess}{}^2) < P < 1.01(P_{base} - E_{excess} - 2E_{excess}{}^2)$$

and more preferably based on the following formula:

$$P = P_{base} - E_{excess} - 2E_{excess}{}^2.$$

3. Method according to claim 1 or 2, **characterized in that** said yogurt is a stirred yogurt produced by breaking up the gel formed after fermentation of the mixture, in particular by passing the fermented mixture through a filter before filling the yogurt into containers.

4. Method according to claim 3, **characterized in that** said condition is not optional and that said predetermined minimal amount of protein ($P_{min}$), expressed in g/100 ml of milk, is lower than 1.15, preferably lower than 1.05 and more preferably lower than 0.95.

5. Method according to claim 3 or 4, **characterized in that** said condition is not optional and that said predetermined minimal amount of protein ($P_{min}$), expressed in g/100 ml of milk, is higher than 0.7, preferably higher than 0.8 and more preferably higher than 0.85.

6. Method according to any of the claims 3 tot 5, **characterized in that** the value of $P_{base}$ in said formula is chosen sufficiently high for the batches of the stirred yogurt to have an average viscosity at 8°C that is at least 1300 mPa.s, preferably at least 1400 mPa.s and more preferably at least 1500 mPa.s.

7. Method according to claim 1 or 2, **characterized in that** the yogurt is a set yogurt produced by filling said mixture into containers before fermentation.

8. Method according to claim 7, **characterized in that** said optional condition is not taken into account, so that P can be zero.

9. Method according to claim 7 or 8, **characterized in that** the value of $P_{base}$ in said formula is chosen sufficiently high for the batches of the set yogurt to have an average viscosity at 8°C comprised between 200 and 400 Pa.s, and preferably higher than 250 Pa.s and more preferably lower than 350 Pa.s.

10. Method according to any of the claims 1 tot 9, **characterized in that** at least two milk protein containing powders are mixed into the milk, including at least one skimmed milk powder and at least one whey protein concentrate, wherein an amount of protein ($P_{MMP}$) is added to the milk through said at least one skimmed milk powder, and a further amount of protein ($P_{WEC}$) is added through said at least one whey protein concentrate.

11. Method according to claim 10, **characterized in that** the ratio between $P_{MMP}$, expressed in g/100 ml of milk, and $P_{WEC}$, expressed in g/100 ml of milk, is comprised between 1 and 5, preferably between 2 and 4.

12. Method according to claim 10 or 11, **characterized in that** for producing the different batches of the yogurt, the ratio between $P_{MMP}$, expressed in g/100 ml of milk, and $P_{WEC}$, expressed in g/100 ml of milk is kept constant, or this ratio may differ at most 10% from the average ratio.

13. Method according to any of the claims 3 tot 6 and according to any of the claims 10 tot 12, **characterized in that** said predetermined minimal amount of protein ($P_{min}$), expressed in g/100 ml of milk, comprises at least 0.20 g/100 ml proteins originating from said at least one whey protein concentrate.

14. Method according to any of the claims 1 tot 13, **characterized in that** said mixture is pasteurized for a time of at least 8 minutes at a temperature in excess of 88°C.

15. Method according to any of the claims 1 tot 14, **characterized in that** no further stabilizers are added to said mixture apart from said milk protein containing powder.

16. Method according to any of the claims 1 tot 15, **characterized in that** the milk in said batch is standardized, in particular by adding cream or by adding fresh skimmed milk, so that a predetermined fat content is obtained in the yogurt, wherein said base milk has a same standardized fat content.

17. Method according to any of the claims 1 tot 16, **characterized in that** the maximum variation of the protein content of the fresh milk is monitored over at least one year, wherein said minimum protein content ($E_{min}$) and said maximum protein content ($E_{max}$) are determined, wherein said base milk has a protein content ($E_{base}$) that is at most equal to said minimum protein content ($E_{min}$) and that is at most 0.1 g/100ml lower than said minimum protein content ($E_{min}$).

**Patentansprüche**

1. Ein Verfahren zur Herstellung verschiedener Chargen eines Joghurts aus Frischmilch mit einem Proteingehalt (E), der schwankt zwischen einem minimalen ($E_{min}$) und einem maximalen Proteingehalt ($E_{max}$), wobei das Verfahren, für jede Charge des erwähnten Joghurts folgende Schritte umfasst:

- Bereitstellen einer Charge von Frischmilch;
- Bestimmen des Proteingehalts (E) der Milch in der erwähnten Charge;
- Hinzufügen einer vorgegeben Menge an Protein (P) zur Milch in der erwähnten Charge durch Mischen von zumindest einem Milchprotein enthaltenden Pulver in die Milch, um eine Mischung zu bilden;
- Pasteurisieren und Homogenisieren der erwähnten Mischung;
- Überimpfen der pasteurisierten Mischung mit Milchsäurebakterien, einschließlich von zumindest *Lactobacillus delbrueckii* ssp. *Bulgaricus* und *Streptococcus thermophilus;* und
- Fermentieren der Mischung mit den erwähnten Milchsäurebakterien, um die erwähnte Charge von Joghurt zu bilden,

**dadurch gekennzeichnet, dass**
für eine Basismilch mit einem Proteingehalt ($E_{base}$), der höchstens gleich hoch ist wie der erwähnte minimale Proteingehalt ($E_{min}$), eine Menge an Protein ($P_{base}$) bestimmt wird, um durch das erwähnte Milchprotein enthaltende Pulver zur erwähnten Basismilch hinzugefügt zu werden, um den erwähnten Joghurt zu erhalten, und dadurch, dass für jede Charge des erwähnten Joghurts die erwähnte vorgegebene Menge an Protein (P) nach der folgenden Formel bestimmt wird:

$$0,9(P_{base}-E_{excess}-2E_{excess}{}^2) < P < 1,1(P_{base}-E_{excess}-2E_{excess}{}^2)$$

mit

$$E_{excess} = E - E_{base},$$

wobei:

P = die erwähnte vorgegebene Menge an Protein ausgedrückt in g/100 ml Milch ist;
E = der Proteingehalt der Milch in der erwähnten Charge ausgedrückt in g/100 ml Milch ist;
$E_{base}$ = der Proteingehalt der erwähntem Basismilch ist, ausgedrückt in g/100 ml Milch; und
$P_{base}$ = die erwähnte Menge an Protein ist, ausgedrückt in g Protein/100 ml Milch, hinzuzufügen zur erwähnten Basismilch durch das erwähnte Milchprotein enthaltende Pulver, um den erwähnten Joghurt zu erhalten, mit der optionalen Bedingung, dass, wenn P nach der erwähnten Formel niedriger ist als eine vorgegebene Mindestmenge an Protein ($P_{min}$), P dann gleich sein sollte, wie die vorgegebene Mindestmenge an Protein ($P_{min}$).

2. Verfahren nach Anspruch 1, **dadurch gekennzeichnet, dass** für jede Charge des erwähnten Joghurts die erwähnte vorgegebene Menge an Protein (P) nach der folgenden Formel bestimmt wird:

$$0,95(P_{base}-E_{excess}-2E_{excess}{}^2) < P < 1,05(P_{base}-E_{excess}-2E_{excess}{}^2),$$

bevorzugt basierend auf der folgenden Formel:

$$0,99(P_{base}-E_{excess}-2E_{excess}{}^2) < P < 1,01(P_{base}-E_{excess}-2E_{excess}{}^2)$$

und nach besser basierend auf der folgenden Formel:

$$P = P_{base}-E_{excess}-2E_{excess}{}^2.$$

3. Verfahren nach Anspruch 1 oder 2, **dadurch gekennzeichnet, dass** der erwähnte Joghurt ein gerührter Joghurt ist, hergestellt durch Aufbrechen des nach der Fermentation der Mischung gebildeten Gels, insbesondere durch Passieren der fermentierten Mischung durch einen Filter, bevor der Joghurt in Behälter gefüllt wird.

4. Verfahren nach Anspruch 3, **dadurch gekennzeichnet, dass** die erwähnte Bedingung nicht optional ist und dass die erwähnte vorgegebene Mindestmenge an Protein ($P_{min}$), ausgedrückt in g/100 ml Milch, geringer ist als 1,15, bevorzugt geringer als 1,05 und noch besser geringer als 0,95.

5. Verfahren nach Anspruch 3 oder 4, **dadurch gekennzeichnet, dass** die erwähnte Bedingung nicht optional ist und dass die erwähnte vorgegebene Mindestmenge an Protein ($P_{min}$), ausgedrückt in g/100 ml Milch, höher ist als 0,7, bevorzugt höher als 0,8 und noch besser höher als 0,85.

6. Verfahren nach irgendeinem der Ansprüche 3 bis 5, **dadurch gekennzeichnet, dass** der Wert von $P_{base}$ in der erwähnten Formel ausreichend hoch gewählt wird, damit die Chargen des gerührten Joghurts eine durchschnittliche Viskosität bei 8 °C haben, die mindestens 1.300 mPa.s beträgt, bevorzugt mindestens 1.400 mPa.s und noch besser mindestens 1.500 mPa.s.

7. Verfahren nach Anspruch 1 oder 2, **dadurch gekennzeichnet, dass** der Joghurt ein stichfester Joghurt ist, hergestellt durch Füllen der erwähnten Mischung in Behälter vor der Fermentation.

8. Verfahren nach Anspruch 7, **dadurch gekennzeichnet, dass** die erwähnte optionale Bedingung nicht berücksichtigt wird, sodass P null sein kann.

9. Verfahren nach Anspruch 7 oder 8, **dadurch gekennzeichnet, dass** der Wert von $P_{base}$ in der erwähnten Formel ausreichend hoch gewählt wird, damit die Chargen des stichfesten Joghurts eine durchschnittliche Viskosität bei 8 °C haben, die zwischen 200 und 400 Pa.s beträgt, und bevorzugt mehr als 250 mPa.s und noch besser weniger als 350 mPa.s.

10. Verfahren nach irgendeinem der Ansprüche 1 bis 9, **dadurch gekennzeichnet, dass** zumindest zwei Milchprotein enthaltende Pulver in die Milch gemischt werden, einschließlich zumindest eines Magermilchpulvers und zumindest eines Molkeproteinkonzentrats, wobei eine Menge an Protein ($P_{MMP}$) über das erwähnte zumindest eine Magermilchpulver zur Milch hinzugefügt wird, und eine weitere Menge an Protein ($P_{WEC}$) durch das erwähnte zumindest eine Molkeproteinkonzentrat hinzugefügt wird.

**11.** Verfahren nach Anspruch 10, **dadurch gekennzeichnet, dass** das Verhältnis zwischen $P_{MMP}$, ausgedrückt in g/100 ml Milch, und $P_{WEC}$, ausgedrückt in g/100 ml Milch, zwischen 1 und 5 liegt, bevorzugt zwischen 2 und 4.

**12.** Verfahren nach Anspruch 10 oder 11, **dadurch gekennzeichnet, dass** für die Herstellung der verschiedenen Chargen des Joghurts das Verhältnis zwischen $P_{MMP}$, ausgedrückt in g/100 ml Milch, und $P_{WEC}$, ausgedrückt in g/100 ml Milch, konstant gehalten wird, oder dass dieses Verhältnis um höchstens 10 % vom durchschnittlichen Verhältnis abweichen darf.

**13.** Verfahren nach irgendeinem der Ansprüche 3 bis 6 und nach irgendeinem der Ansprüche 10 bis 12, **dadurch gekennzeichnet, dass** die erwähnte vorgegebene Mindestmenge an Protein ($P_{min}$), ausgedrückt in g/100 ml Milch, mindestens 0,20 g/100 ml Proteine umfasst, welche vom erwähnten zumindest einen Molkeproteinkonzentrat stammen.

**14.** Verfahren nach irgendeinem der Ansprüche 1 bis 13, **dadurch gekennzeichnet, dass** die erwähnte Mischung für eine Zeit von mindestens 8 Minuten bei einer Temperatur über 88 °C pasteurisiert wird.

**15.** Verfahren nach irgendeinem der Ansprüche 1 bis 14, **dadurch gekennzeichnet, dass** außer dem erwähnten Milchprotein enthaltenden Pulver keine weiteren Stabilisatoren zur erwähnten Mischung hinzugefügt werden.

**16.** Verfahren nach irgendeinem der Ansprüche 1 bis 15, **dadurch gekennzeichnet, dass** die Milch in der erwähnten Charge standardisiert ist, insbesondere durch Hinzufügen von Sahne oder durch Hinzufügen von frischer Magermilch, sodass ein vorgegebener Fettgehalt im Joghurt erreicht wird, wobei die erwähnte Basismilch denselben standardisierten Fettgehalt hat.

**17.** Verfahren nach irgendeinem der Ansprüche 1 bis 16, **dadurch gekennzeichnet, dass** die maximale Schwankung des Proteingehalts der Frischmilch über zumindest ein Jahr überwacht wird, wobei der erwähnte minimale Proteingehalt ($E_{min}$) und der erwähnte maximale Proteingehalt ($E_{max}$) bestimmt werden, wobei die erwähnte Basismilch einen Proteingehalt ($E_{base}$) hat, der höchstens gleich hoch ist wie der erwähnte minimale Proteingehalt ($E_{min}$) und der höchstens 0,1 g/100 ml niedriger ist als der erwähnte minimale Proteingehalt ($E_{min}$).

**Revendications**

**1.** Procédé de fabrication de différents lots d'un yaourt à partir de lait frais ayant une teneur en protéines (E) qui est variable entre une teneur en protéines minimale ($E_{min}$) et une teneur en protéines maximale ($E_{max}$), dans lequel le procédé, pour chaque lot dudit yaourt, comprend les étapes suivantes consistant à :

- fournir un lot de lait frais ;
- déterminer la teneur en protéines (E) du lait dans ledit lot ;
- ajouter une quantité prédéterminée de protéines (P) au lait dans ledit lot en mélangeant au moins une poudre contenant des protéines de lait dans le lait pour former un mélange ;
- pasteuriser et homogénéiser ledit mélange ;
- inoculer le mélange pasteurisé avec des bactéries lactiques, comprenant au moins de *Lactobacillus delbrueckii* ssp. *Bulgaricus* et *Streptococcus thermophilus ;* et
- fermenter le mélange avec lesdites bactéries lactiques pour former ledit lot de yaourt,

**caractérisé en ce que**
pour un lait de base ayant une teneur en protéines ($E_{base}$) qui est au plus égale à ladite teneur minimale en protéines ($E_{min}$), on détermine une quantité de protéines ($P_{base}$) à ajouter audit lait de base par l'intermédiaire de ladite poudre contenant des protéines de lait pour obtenir ledit yaourt, et que pour chaque lot dudit yaourt, ladite quantité prédéterminée de protéines (P) est déterminée sur la base de la formule suivante :

$$0,9(P_{base}-E_{excès}-2E_{excès}^2) < P < 1,1(P_{base}-E_{excès}-2E_{excès}^2)$$

avec

$$E_{excès} = E-E_{base},$$

où :

P = ladite quantité prédéterminée de protéines exprimée en g/100 ml de lait ;
E = la teneur en protéines du lait dans ledit lot, exprimée en g/100 ml de lait ;
$E_{base}$ = la teneur en protéines dudit lait de base, exprimée en g/100 ml de lait ; et
$P_{base}$ = ladite quantité de protéines, exprimée en g de protéines/100 ml de lait, à ajouter audit lait de base par l'intermédiaire de ladite poudre contenant des protéines de lait pour obtenir ledit yaourt,
avec la condition facultative que lorsque P selon ladite formule est inférieur à une quantité minimale prédéterminée de protéine ($P_{min}$), alors P devrait être égal à ladite quantité minimale prédéterminée de protéine ($P_{min}$).

2. Procédé selon la revendication 1, **caractérisé en ce que** pour chaque lot dudit yaourt, ladite quantité prédéterminée de protéine (P) est déterminée sur la base de la formule suivante :

$$0,95(P_{base}-E_{excès}-2E_{excès}^2) < P < 1,05(P_{base}-E_{excès}-2E_{excès}^2),$$

de préférence sur la base de la formule suivante :

$$0,99(P_{base}-E_{excès}-2E_{excès}^2) < P < 1,01(P_{base}-E_{excès}-2E_{excès}^2)$$

et de préférence sur la base de la formule suivante :

$$P = P_{base}-E_{excès}-2E_{ecxès}^2.$$

3. Procédé la revendication 1 ou 2, **caractérisé en ce que** ledit yaourt est un yaourt brassé produit par la rupture du gel formé après la fermentation du mélange, en particulier en faisant passer le mélange fermenté à travers un filtre avant de remplir le yaourt dans des récipients.

4. Procédé selon la revendication 3, **caractérisé en ce que** ladite condition n'est pas facultative et que ladite quantité minimale prédéterminée de protéines ($P_{min}$), exprimée en g/100 ml de lait, est inférieure à 1,15, de préférence inférieure à 1,05 et plus préférablement inférieure à 0,95.

5. Procédé selon la revendication 3 ou 4, **caractérisé en ce que** ladite condition n'est pas facultative et que ladite quantité minimale prédéterminée de protéine ($P_{min}$), exprimée en g/100 ml de lait, est supérieure à 0,7, de préférence supérieure à 0,8 et plus préférablement supérieure à 0,85.

6. Procédé selon l'une quelconque des revendications 3 à 5, **caractérisé en ce que** la valeur de $P_{base}$ dans ladite formule est choisie suffisamment élevée pour que les lots de yaourt brassé aient une viscosité moyenne à 8 °C qui est au moins 1300 mPa.s, de préférence au moins 1400 mPa.s et plus préférablement au moins 1500 mPa.s.

7. Procédé selon la revendication 1 ou 2, **caractérisé en ce que** le yaourt est un yaourt ferme produit par remplissage dudit mélange dans des récipients avant la fermentation.

8. Procédé selon la revendication 7, **caractérisé en ce que** ladite condition facultative n'est pas prise en compte, de sorte que P peut être égal à zéro.

9. Procédé selon la revendication 7 ou 8, **caractérisé en ce que** la valeur de $P_{base}$ dans ladite formule est choisie suffisamment élevée pour que les lots du yaourt ferme aient une viscosité moyenne à 8 °C comprise entre 200 et 400 Pa.s, et de préférence supérieure à 250 Pa.s et plus préférablement inférieure à 350 Pa.s.

10. Procédé selon l'une quelconque des revendications 1 à 9, **caractérisé en ce qu'**au moins deux poudres contenant des protéines de lait sont mélangées dans le lait, comprenant au moins une poudre de lait écrémé et au moins un concentré de protéines de lactosérum, dans lequel une quantité de protéines ($P_{MMP}$) est ajoutée au lait par l'intermédiaire de ladite au moins une poudre de lait écrémé, et une quantité supplémentaire de protéines ($P_{WEC}$) est ajoutée par l'intermédiaire dudit au moins un concentré de protéines de lactosérum.

11. Procédé selon la revendication 10, **caractérisé en ce que** le rapport entre la $P_{MMP}$, exprimée en g/100 ml de lait, et la $P_{WEC}$, exprimée en g/100 ml de lait, est compris entre 1 et 5, de préférence entre 2 et 4.

12. Procédé selon la revendication 10 ou 11, **caractérisé en ce que**, pour la production des différents lots du yaourt, le rapport entre la $P_{MMP}$, exprimée en g/100 ml de lait, et la $P_{WEC}$, exprimée en g/100 ml de lait, est maintenu constant, ou ce rapport peut différer de 10 % au maximum du rapport moyen.

13. Procédé selon l'une quelconque des revendications 3 à 6 et selon l'une quelconque des revendications 10 à 12, **caractérisé en ce que** ladite quantité minimale prédéterminée de protéines ($P_{min}$), exprimée en g/100 ml de lait, comprend au moins 0,20 g/100 ml de protéines provenant dudit au moins un concentré de protéines de lactosérum.

14. Procédé selon l'une quelconque des revendications 1 à 13, **caractérisé en ce que** ledit mélange est pasteurisé pendant une durée d'au moins 8 minutes à une température supérieure à 88 °C.

15. Procédé selon l'une quelconque des revendications 1 à 14, **caractérisé en ce qu'**aucun stabilisateur supplémentaire n'est ajouté audit mélange, à l'exception de ladite poudre contenant des protéines de lait.

16. Procédé selon l'une quelconque des revendications 1 à 15, **caractérisé en ce que** le lait dans ledit lot est standardisé, en particulier par l'ajout de crème ou par l'ajout de lait écrémé frais, de sorte qu'une teneur en matière grasse prédéterminée est obtenue dans le yaourt, dans lequel ledit lait de base a une même teneur en matière grasse standardisée.

17. Procédé selon l'une quelconque des revendications 1 à 16, **caractérisé en ce que** la variation maximale de la teneur en protéines du lait frais est contrôlée sur au moins un an, dans lequel ladite teneur en protéines minimale ($E_{min}$) et ladite teneur en protéines maximale ($E_{max}$) sont déterminées, dans lequel ledit lait de base a une teneur en protéines ($E_{base}$) qui est au plus égale à ladite teneur en protéines minimale ($E_{min}$) et qui est au plus 0,1 g/100 ml inférieure à ladite teneur en protéines minimale ($E_{min}$).

Fig.1

Fig.2

## Viscosity

**Fig. 3**

## Histogram

Viscosity

**Fig. 4**

*Fig. 5*

## Viscosity

**Fig. 6**

## Histogram

Viscosity

**Fig. 7**

## Viscosity

**Fig. 8**

## Histogram

**Fig. 9**

**Fig. 10**

**Fig. 11**

*Fig. 12*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **HATTEM, H. E. et al.** Effect of pasteurisation and season on milk composition and ripening of Ras cheese. *Journal of Brewing and Distilling,* March 2012, vol. 3 (2), 15-22

- Manufacturing Yoghurt and Fermented Milks, Milk and milk-based dairy ingredients. **SODININ ISA-BELLE et al.** MANUFACTURING YOGURT AND FERMENTED MILKS. BLACKWELL PUBLISHING, 01 January 2006, 167-177
- **DR. ALAN HUGUNIN.** U.S. Whey Ingredients in Yogurt and Yogurt Beverages. U.S. Dairy Export Council®, 2009